**Europäisches Patentamt**

**European Patent Office**

**Office européen des brevets**

(19)

(11) Veröffentlichungsnummer : **0 280 677 B1**

(12)

# EUROPÄISCHE PATENTSCHRIFT

(45) Veröffentlichungstag der Patentschrift :
**03.06.92 Patentblatt 92/23**

(51) Int. Cl.$^5$ : **B60J 5/06**

(21) Anmeldenummer : **88890038.8**

(22) Anmeldetag : **26.02.88**

(54) Schwenk- oder Schwenkschiebetür für Fahrzeuge.

(30) Priorität : **26.02.87 AT 438/87**

(43) Veröffentlichungstag der Anmeldung :
**31.08.88 Patentblatt 88/35**

(45) Bekanntmachung des Hinweises auf die
Patenterteilung :
**03.06.92 Patentblatt 92/23**

(84) Benannte Vertragsstaaten :
**AT BE CH DE FR GB IT LI**

(56) Entgegenhaltungen :
**EP-A- 0 196 488**
**WO-A-83/01084**
**AT-B- 366 633**
**AT-B- 378 814**
**US-A- 3 349 723**

(73) Patentinhaber : **IFE Industrie-Einrichtungen
Fertigungs-Aktiengesellschaft
Patertal 20
A-3340 Waidhofen a.d. Ybbs (AT)**

(72) Erfinder : **Fink, Martin
Weyrerstrasse 28
A-3340 Waidhofen a.d. Ybbs (AT)**

(74) Vertreter : **Barger, Werner, Dipl.-Ing. et al
Patentanwälte Barger, Piso & Partner
Postfach 333
A-1011 Wien (AT)**

## Beschreibung

Die Erfindung betrifft eine Schwenk- oder Schwenkschiebetür für Fahrzeuge mit einer Schließ- bzw. Öffnungsbewegungsrichtung, die in unmittelbarer Umgebung der Schließendlage bezüglich der Türblattebene einen Winkel aufweist, der ungleich 90 Grad ist, ein am Türrahmen vorgesehener, um eine vertikale Achse verschwenkbarer Drehriegel mit seinem türseitigen Ende gegen eine Angriffsfläche an der, in Schließrichtung der Tür gesehen, vertikalen Türhinterkante in zumindest angenäherter Schließendrichtung der Türbewegung angepreßt wird und die Türvorderkante zumindest annähernd in Schließendrichtung geführt wird und am Türrahmen eine im Bereich der vertikalen und horizontalen Türkanten umlaufende Dichtung vorgesehen ist, die bei geschlossener Tür zwischen Türrahmen und Tür dichtend gepreßt wird,

Eine derartige Türe, die dem einleitenden Teil des Anspruches 1 entspricht, ist aus der AT-A-366 633, die weiter unten gewürdigt wird, bekannt.

Aus der EP-A2 0 196 488 ist eine Tür bekannt, bei der zwei aufeinander senkrecht stehende Bewegungen beim Öffnen bzw. Schließen vollführt werden müssen. Beim Öffnen folgt auf eine praktisch senkrecht zur Türblattebene erfolgende Ausstellbewegung eine in Türblattebene erfolgende Öffnungsbewegung. Die beiden Bewegungen folgen nicht zwangsläufig aufeinander, da für jede Bewegung eigene Führungs- und Betätigungsvorrichtungen vorgesehen sind und es müssen somit Mittel vorgesehen werden, die die richtige Abfolge des Öffnens bzw. Schließens sicherstellen. In der genannten Druckschrift wird diese komplizierte und störanfällige Konstruktion, die darüberhinaus bei Ausfall der normalen Betriebsmittel sowie im Notfall durch ungeübte oder physisch schwache Personen kaum zu öffnen ist, gewählt, um eine Dichtheit der Tür zu erreichen, wie sie bei hohen Reisegeschwindigkeiten, insbesondere bei der Eisenbahn, notwendig ist.

Bei den derzeit in Betrieb oder in Planung befindlichen Hochgeschwindigkeitsstrecken der europäischen Eisenbahnverwaltungen kommt es bei der Begegnung zweier Züge, insbesondere in zweigleisigen Tunnels, zu Druckstößen bis 6000 Pa. Dabei teilt sich diese Druckdifferenz in einen Überdruckaufbau vor der Begegnung der beiden Züge und einen Unterdruckbereich während der Vorbeifahrt, der dem Betrag nach größer ist als der Druckstoß. Eine derartige Druckänderung innerhalb weniger Sekunden ist für die Passagiere nicht zumutbar und muß daher durch die Wagenkonstruktion verringert oder beseitigt werden. Dazu ist es notwendig, die Türen sowohl gegen Über- als auch Unterdruck entsprechend zu dichten. Dies ist problematisch, da durch die Türfläche von über 2 m² Kräfte über 10 kN wirksam werden, was bei üblichen Türverschlüssen zum Aufbiegen entlang der vertikalen Türdichtungen und zum nahezu augenblicklichen Druckausgleich führt. Die horizontalen Dichtungen sind bei den üblichen, etwa 100 cm breiten Türen aufgrund des kürzeren Hebelarmes durch das Aufbiegen nicht so gefährdet. Es ist in der eingangs erwähnten europäischen Patentschrift daher vorgesehen, an den hinteren und vorderen vertikalen Schließkanten des Türflügels mehrere zusätzliche Verriegelungsmittel anzubringen, in die die Tür am Ende der Schließbewegung schräg abgesenkt wird und durch ihr Eigengewicht gegen die vertikale Türdichtung gepreßt bleibt. Da das Eigengewicht der Tür ca. 800 N beträgt, ist dies die maximale Dichtkraft.

Zufolge der Verformung der Tür, die bis zu 13,5 mm betragen kann, ist es möglich, daß in Bereichen, in denen die Verformungsrichtung zumindest annähernd parallel zur Absenkrichtung liegt, trotz dieser zusätzlichen Verriegelungsmittel eine Entriegelung erfolgt und die Tür undicht wird.

Aus der AT-A-378 814 ist es bekannt, eine am hinteren Türblattende befestigte Rolle mittels eines am Türstock drehbar befestigten Hakens zu hintergreifen und die Tür mittels dieses Hakens in die Schließendlage zu pressen. Diese Vorrichtung dient ausschließlich der Verbesserung der Führung im Schließendlagenbereich und erfolgt entweder an der Türober- oder -unterseite. Es ist somit durch diese Vorrichtung bei den geschilderten Umständen keine Dichtheit der Tür zu erreichen.

Aus der eingangs zitierten AT-A-366 633 ist eine Schiebetür bekannt, bei der das Einfahren des Schwenkschiebetürflügels in die Schließendlage unabhängig vom genauen Einbau der Dichtungselemente am Portalrahmen erfolgt. Dazu ist vorgesehen, daß ein am Portalrahmen angebrachter Arm als um eine vertikale Achse schwenkbar angetriebener Hebel ausgebildet ist, dessen freies Ende zur Unterstützung der Verschiebeendbewegung und der Schließbewegung des Türflügels gegen eine zur rückwärtigen Begrenzung des Türflügels hin gerichtete Anschlagfläche schwenkbar ist. Auch bei dieser nur einfach vorgesehenen Hilfsvorrichtung ist eine Dichtheit der Tür nicht zu erreichen.

Die Aufgabe der Erfindung besteht somit darin, bei einer Tür der eingangs erwähnten Art eine Vorrichtung zu schaffen, die ein zuverlässiges Abdichten gegen die dynamischen Druckstöße sicherstellt und die im Gegensatz zu bekannten Türen bei Ausfall dieser Vorrichtung dennoch ein Betätigen und Verriegeln der Tür erlaubt. Darüberhinaus soll die Tür im Notfall und im Störfall auch von ungeübten Passagieren einfach und ohne besondere Kraftanwendung von innen und außen zu betätigen sein.

Erfindungsgemäß ist dabei vorgesehen, daß es mehrere Drehriegel gibt die erst nach erfolgtem Schließen der Tür betätigt werden und daß an der, in Schließrichtung der Tür gesehen, vertikalen Türvorderkante mindestens eine Steuerfläche mit mindestens einer Auflauffläche des Türrahmens zusammenwirkt.

Durch die erfindungsgemäßen Maßnahmen wird eine Türdichtung völlig unabhängig von der Bewegungs- und Verriegelungsvorrichtung geschaffen, die daher bei den unterschiedlichsten Türsystemen verwendet werden kann. Die Steuerung der Dichtvorrichtung geschieht am einfachsten durch an sich bekannte, vom verwendeten Antriebsmedium abhängige Einschaltvorrichtungen, die durch die Tür beim Erreichen der Schließendlage betätigt werden. Bei Ausfall der Dichtvorrichtung ist ein einwandfreies Funktionieren der Verriegelungs- und Bewegungsmechanismen nach wie vor gegeben. Beim Handbetrieb ist durch ein Stromlos- oder Drucklosmachen der Dichtvorrichtung keine nennenswerte zusätzliche Kraft beim Öffnen bzw. Schließen aufzubringen. Die Ausbildung der Schließhebel sowie deren Anzahl kann in Kenntnis der Erfindung vom Fachmann leicht an die jeweiligen Gegebenheiten angepaßt werden und es können selbstverständlich alle gewünschten zusätzlichen Sicherheitsvorrichtungen, wie Fingerschutz etc. angebracht werden, ohne daß auf die Dichtvorrichtung speziell Bedacht genommen werden muß. Durch die Steuer- und Auflauffläche an der Türvorderseite ist eine formschlüssige Verriegelung in einer Richtung gegeben, die der Deformationsrichtung der Tür nicht entspricht und somit auch bei starken Verwerfungen nicht entriegelt werden kann. Die Hebel an der Türrückseite stellen eine aktive Sicherheit dar, die ebenfalls quer zur Hauptderformationsrichtung der Tür in diesem Bereich wirkt und durch die wesentlich größere Kräfte wirksam gemacht werden können als die 800 N bei der Vorrichtung gemäß der EP-A-0 196 488.

Die Erfindung wird anhand der beiliegenden Zeichnungen näher erläutert. Dabei zeigt

Fig. 1 eine erfindungsgemäße Dichtung in einer beispielsweisen Ausbildusngsform;

Fig. 2 eine andere Ausführungsform und

Fig. 3 eine Skizze eines erfindungsgemäß erzielbaren Kräftediagramms der Tür im "Dichtzustand".

In der folgenden Beschreibung werden die Bezeichnungen "vorne" und "hinten" auf die Schließbewegung, nicht auf die Öffnungsbewegung oder die Fahrtrichtung bezogen.

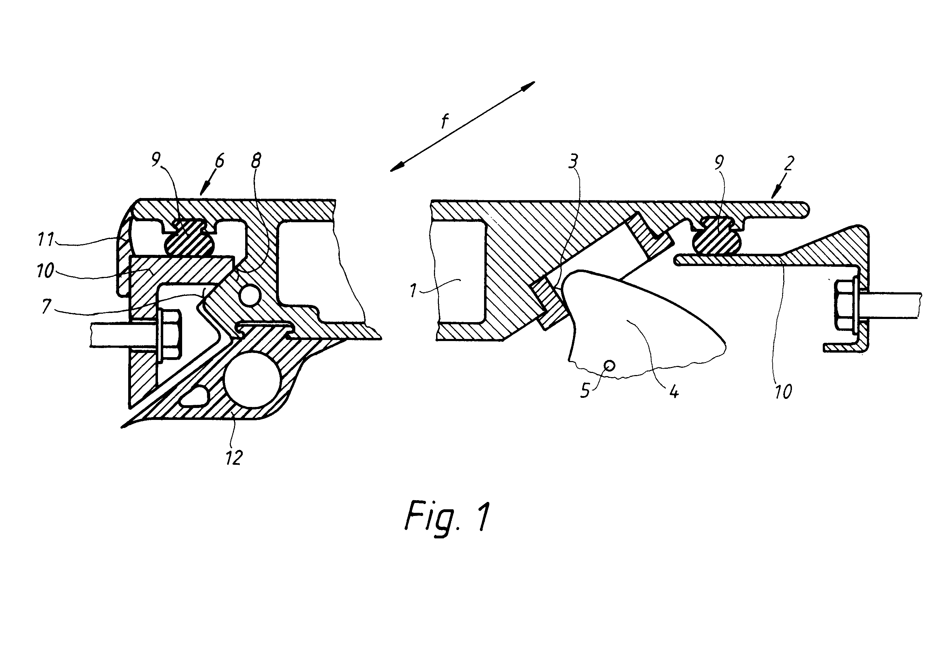

Eine Tür 1 wird durch eine nicht dargestellte Betätigungsund Verriegelungsvorrichtung in Richtung des Doppelpfeiles f im Bereich der Schließendlage bewegt. Im Bereich des hinteren Türendes 2 ist eine durchgehende Anpreßfläche 3 vorgesehen, die zumindest angenähert senkrecht zur Richtung f verläuft und auf die mehrere Hebel 4 im "Dichtzustand" der Tür wirken. Es ist möglich, diese durchlaufende Fläche durch mehrere kleine Flächen zu ersetzen, die jeweils im Bereich eines Hebels 4 angeordnet sind. Die Hebel 4 sind um Achsen 5 schwenkbar und werden je nach dem für den Türmechanismus verwendeten Antriebsmedium elektromagnetisch, hydraulisch, mechanisch oder pneumatisch verschwenkt. Im Bereich der Türvorderkante 6 ist am Türrahmen 10 eine durchlaufende Auflauffläche 7 angebracht und mit ihr zusammenwirkend an der Tür eine durchlaufende Steuerfläche 8. Diese beiden Flächen bewirken eine Führung der Türvorderseite 6 in zumindest angenäherter Richtung f. Sie können wie die Anpreßfläche 3 durch mehrere kleine Flächen ersetzt werden. Durch die erzwungene Bewegung über die gesamte Höhe der Tür 1 werden Dichtungen 9 zwischen der Tür 1 und dem Rahmen 10 so verpreßt, daß sie zuverlässig dichten. Im Ausführungsbeispiel nach Fig. 1 ist eine zusätzliche Staubdichtung 11 sowie ein Fingerschutz 12 bekannter Bauart vorgesehen.

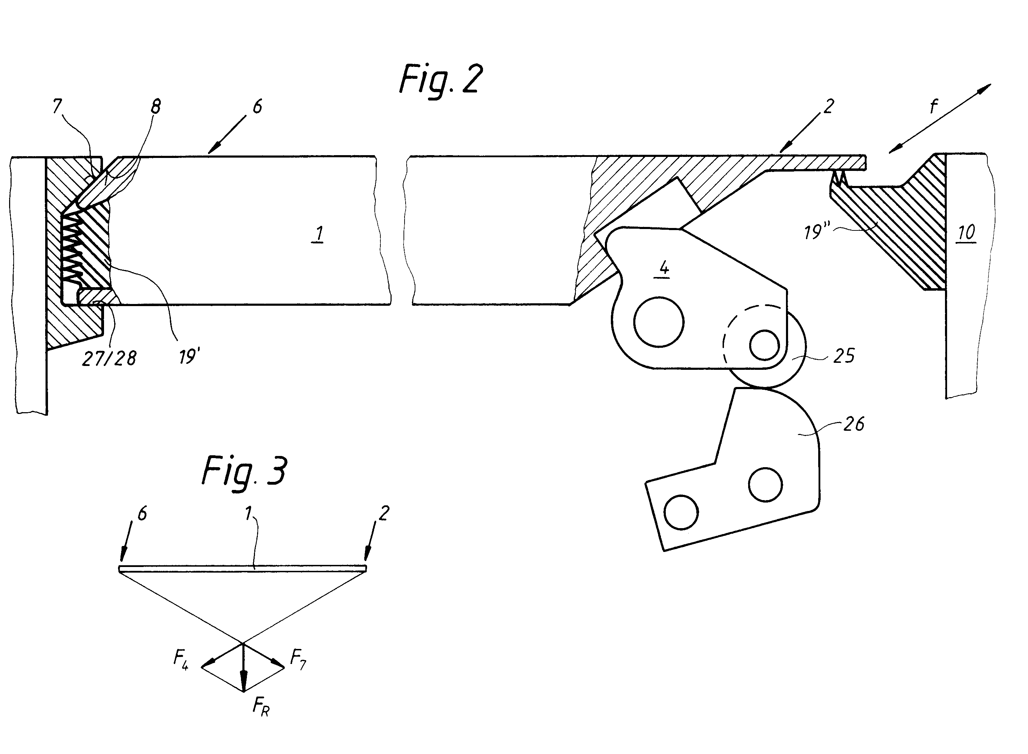

Bei der Ausführungsform nach Fig. 2 ist die Dichtung am Türblatt 1 (19′) und stellenweise am Türrahmen 10 (19″) befestigt. Dabei ist auch die Verquetschrichtung für die Dichtung zum Teil anders als bei der Ausführungsform nach Fig. 1. In Fig. 2 ist auch ein möglicher Antrieb für den Hebel 4 dargestellt, der mittels einer Rolle 25 und einer Betätigung 26 erfolgt, die den Hebel gegen die Tür und somit gegen die Kraft der Dichtung preßt und durch ihre Form verriegelt hält. An der Türvorderkante ist bei dieser Ausführungsform ein Schutz gegen das zu starke Verpressen der Dichtung 19′ in Form des Doppelanschlages entlang der Steuer-/Auflauffläche 7,8 und der zur Richtung f annähernd senkrecht stehenden Rast 27,28 vorgesehen. Die am Rahmen 10 befestigte Dichtung 19″ ist so ausgebildet, daß sie auch große Deformationen ohne Beschädigung aufnehmen kann.

Aus Fig. 3 sind die Kräfteverhältnisse beim "Dichtzustand" der Tür ersichtlich. Die am hinteren Türende angreifende Kraft $F_4$ die von den Hebeln 4 aufgebracht wird, ist entlang ihrer Wirkungslinie bis zum Schnittpunkt mit der Wirkungslinie der von der Steuerfläche 7 auf die Tür wirkenden, ebenfalls dorthin verschobenen Kraft $F_7$ verschoben und die Resultierende $F_R$ gebildet. Wie leicht ersichtlich, ist es durch geeignete Auswahl der Winkel möglich, eine Resultierende zu erhalten, die zumindest annähernd senkrecht auf die Türebene steht, was bei äusserem Unterdruck vorteilhaft ist.

Die Erfindung ist nicht auf die dargestellten Ausführungsbeispiele beschränkt, sondern kann verschiedentlich variiert werden. So ist es möglich, die Hebel 4 anders auszuformen oder durch eine durchlaufende Nocke zu ersetzen. Auch kommt es auf den Antrieb oder den Drehpunkt der Hebel 4 nicht an, solange dadurch die Wirkrichtung dieser Hebel nicht beeinträchtigt wird. Die Steuerund Auflaufflächen 7,8 müssen nicht eben sein und können auch durch bewegliche Elemente, wie Rollen, ersetzt werden. Die Dichtungen können die verschiedenste Gestalt aufweisen und können auf verschiedenste Weise befestigt werden. Die Führung der Dichtung im Bereich der Türunterkante ist auf verschiedene Weise möglich, bevorzugt wird eine Anbringung an der Tür,

EP 0 280 677 B1

um Beschädigungen durch ein- und aussteigende Fahrgäste zu vermeiden. Es ist dabei auch möglich, die Dichtung extrem weit zur Türaußenseite zu legen, was auf das Gefälle der Trittstufen günstigen Einfluß hat. In einer Ausgestaltung ist es möglich, Steuer- und Auflaufflächen auch im Bereich der Türober- und -unterseite vorzusehen, wenn die Türbreite so groß gewählt wird, daß dies erforderlich ist. Es ist in diesem Fall auch möglich, in diesem Bereich des Türrahmens Hebeln analog zu den Hebeln 4 vorzusehen, die mit Anpreßflächen analog den Anpreßflächen 3 zusammenwirken und so für eine aktive Dichtung auch in diesem Bereich der Tür sorgen.

**Patentansprüche**

1. Schwenk- oder Schwenkschiebetür (1) für Fahrzeuge mit einer Schließ- bzw. Öffnungsbewegungsrichtung, die in unmittelbarer Umgebung der Schließendlage bezüglich der Türblattebene einen Winkel aufweist, der ungleich 90 Grad ist, ein am Türrahmen (10) vorgesehener, um eine vertikale Achse (5) verschwenkbarer Drehriegel (4) mit seinem türseitigen Ende gegen eine Angriffsfläche (3) an der, in Schließrichtung der Tür gesehen, vertikalen Türhinterkante (4) in zumindest angenäherter Schließendrichtung (f) der Türbewegung angepreßt wird und die Türvorderkante (6) zumindest annähernd in Schließendrichtung geführt wird und am Türrahmen (10) eine im Bereich der vertikalen und horizontalen Türkanten umlaufende Dichtung vorgesehen ist, die bei geschlossener Tür zwischen Türrahmen (10) und Tür (1) dichtend gepreßt wird, dadurch gekennzeichnet, daß es mehrere Drehriegel (4) gibt die erst nach erfolgtem Schließen der Tür betätigt werden und daß an der, in Schließrichtung der Tür gesehen, vertikalen Türvorderkante (6) mindestens eine Steuerfläche (8) mit mindestens einer Auflauffläche (7) des Türrahmens (10) zusammenwirkt.

2. Tür nach Anspruch 1, dadurch gekennzeichnet daß die Dichtung (9) an der Tür (1) vorgesehen ist und gegen zumindest eine zumindest annähernd in der Türebene liegende Dichtfläche am Türrahmen (10) gepreßt wird.

3. Tür nach Anspruch 1 oder 2, dadurch gekennzeichnet, daß an der Türvorderkante (6) als Schutz gegen das zu starke Verpressen der Dichtung (19′) eine Rast, bestehend aus einer Rahmenfläche (27) und einer Türfläche (28) vorgesehen ist, wobei die Flächen mit der Richtung (f) einen Winkel einschließen, der von Null verschieden ist, und daß die Dichtung (19″) am Rahmen (10) befestigt ist.

4. Tür nach einem der vorstehenden Ansprüche, dadurchgekennzeichnet , daß die von den Drehriegeln (4) aufgebrachte Kraft $F_4$ mit der von der Steuerfläche (7) auf die Tür wirkenden Kraft $F_7$ eine Resultierende $F_R$ bildet, die durch geeignete Auswahl der Winkel der Kräfte $F_4$ und $F_7$ zumindestannähernd senkrecht auf die Türebene steht.

5. Tür nach einem der vorstehenden Ansprüche, dadurchgekennzeichnet , daß Steuer- und Auflaufflächen (7, 8) auch im Bereich der Türober- und -unterseite vorgesehen sind, und daß vorzugsweise auch in diesem Bereich des Türrahmens Drehriegel (4) vorgesehen sind, die mit Anpreßflächen (3) zusammenwirken und so für eine aktive Dichtung auch in diesem Bereich der Tür sorgen.

**Claims**

1. A swinging or swinging-sliding door (1) for vehicles, with a closing and opening movement direction, which in the immediate vicinity of the closing end position has, in relation to the plane of the door leaf, an angle which is not equal to 90°, a rotary bolt (4) which is provided on the door frame (10), and is pivotable about a vertical axis (5) and which at its end on the door side is pressed against an engagement surface (3) on the vertical door rear edge (4) [sic], viewed in the closing direction of the door, in at the least approximate closing end direction (f) of the door movement, and the door front edge (6) is guided at least approximately in the closing end direction, and on the door frame (10) a peripheral seal is provided in the vicinity of the vertical and horizontal door edges and which, when the door is closed, is pressed between the door frame (10) and the door (1) so as to form a seal, characterised in that a plurality of rotary bolts (4) are provided which are actuated only after the door has been closed, and in that on the vertical door front edge (6), viewed in the closing direction of the door, at least one control surface (8) co-operates with at least one abutting surface (7) of the door frame (10).

2. A door according to Claim 1, characterised in that the seal (9) is provided on the door (1) and is pressed against at least one sealing surface which is disposed on the door frame (10) at least approximately in the plane of the door.

3. A door according to Claim 1 or 2, characterised in that, to prevent the seal (19′) from being excessively compressed, an arresting means, comprising a frame surface (27) and a door surface (28), is provided on the door front edge (6), said surfaces forming with the direction (f) an angle which is not equal to zero, and in that the seal (19″) is secured to the frame (10).

4

4. A door according to any one of the preceding Claims, characterised in that the force $F_4$, applied by the rotary bolts (4), forms with the force $F_7$ acting on the door a resultant force $F_R$ which, by suitable choice of the angles of the forces $F_4$ and $F_7$, is disposed at least approximately perpendicular to the plane of the door.

5. A door according to any one of the preceding Claims, characterised in that abutting and control surfaces (7, 8) are also provided in the vicinity of the top and bottom of the door, and in that, preferably also in this zone of the door frame, rotary bolts (4) are provided which co-operate with engagement surfaces (3) and thus ensure an active seal also in this zone of the door.

## Revendications

1. Porte pivotante ou pivotante et coulissante (1) pour véhicules présentant un sens de déplacement de fermeture ou d'ouverture, qui, à proximité immédiate de la position finale de fermeture, forme avec le plan du vantail de la porte un angle qui est différent de 90°, un tourniquet (4) prévu sur l'encadrement (10) de la porte, qui peut pivoter autour d'un axe vertical (5) et qui est poussé à son extrémité du côté de la porte contre une surface d'attaque (3) sur le bord arrière vertical (4) de la porte, vu dans le sens de fermeture de la porte, au moins approximativement dans le sens final de fermeture (f) du mouvement de la porte, et le bord avant (6) de la porte est guidé au moins sensiblement dans le sens final de fermeture, et il est prévu sur l'encadrement (10) de la porte un joint d'étanchéité qui s'étend dans le domaine des bords verticaux et horizontaux de la porte et qui, la porte étant fermée, est comprimé de manière étanche entre l'encadrement (10) de la porte et la porte (1), caractérisée en ce qu'il y a plusieurs tourniquets (4) qui ne sont actionnés que lorsque la porte est fermée et en ce qu'au moins une surface de commande (8) coopère avec au moins une surface inclinée (7) de l'encadrement (10) de la porte sur le bord avant vertical (6) de la porte, vu dans le sens de fermeture de la porte.

2. Porte selon la revendication 1, caractérisée en ce que le joint d'étanchéité (9) est prévu sur la porte (1) et est comprimé contre au moins une surface d'étanchéité de l'encadrement (10) de la porte située au moins sensiblement dans le plan de la porte.

3. Porte selon la revendication 1 ou 2, caractérisée en ce qu'il est prévu sur le bord avant (6) de la porte, en tant que protection contre la compression trop forte du joint d'étanchéité (19′), un arrêt qui consiste en une surface d'encadrement (27) et en une surface de porte (28), les surfaces formant avec la direction (f) un angle qui n'est pas nul, et en ce que le joint d'étanchéité (19″) est fixé sur l'encadrement (10).

4. Porte selon l'une des revendications précédentes, caractérisée en ce que la force $F_4$ appliquée par les tourniquets (4) forme avec la force $F_7$ appliquée sur la porte par la surface de commande (7) une résultante $F_R$ qui est au moins sensiblement perpendiculaire au plan de la porte par un choix approprié des angles des forces $F_4$ et $F_7$.

5. Porte selon l'une des revendications précédentes, caractérisée en ce que des surfaces de commande et inclinées (7, 8) sont prévues également dans le domaine du côté supérieur et du côté inférieur de la porte et en ce qu'il est prévu de manière avantageuse également des tourniquets (4) dans ce domaine de l'encadrement de la porte qui coopèrent avec des surfaces d'appui (3) en assurant ainsi une étanchéité active également dans ce domaine de la porte.

Fig. 1

Fig.2

Fig.3